# FASCICULE DE BREVET EUROPEEN

(11) **EP 2 000 351 B1**
(45) Date de publication et mention de la délivrance du brevet: **15.02.2012**
(21) Numéro de dépôt: 08157313.1
(22) Date de dépôt: 30.05.2008
(51) Int. Cl.: B60N 2/12, B60N 2/02

(54) **Siège motorisé de véhicule automobile avec un dispositif de commande pour un mouvement securisé du siège**
Motorgetriebener Fahrzeugsitz mit Steuereinheit für eine gesicherte Bewegung des Sitzes
Motorised vehicle seat with a command unit for a secured movement of the seat

(30) Priorité: 08.06.2007 FR 0755590
(43) Date de publication de la demande: 10.12.2008
(73) Titulaire: PEUGEOT CITROËN AUTOMOBILES S.A., 78140 Vélizy Villacoublay (FR)
(72) Inventeur: Foure, Franck, 90000 Belfort (FR)
(74) Mandataire: Vigand, Régis Louis Michel

(56) Documents cités:
- WO-A-2006/017933
- DE-C1- 19 939 183
- FR-A- 2 513 195
- US-A- 5 683 140

## Description

La présente invention concerne un dispositif de commande d'un siège motorisé d'un véhicule automobile à mouvement sécurisé.

L'invention s'applique plus particulièrement aux sièges pour véhicule de type coupé ou trois portes, c'est-à-dire dans lequel les sièges avant doivent être déplacés pour permettre l'accès aux places arrière du véhicule.

Un siège de véhicule comprend généralement une assise portant un dossier basculant entre une position droite et une position rabattue sur l'assise et des moyens de commande pour déclencher l'avance et le recul motorisés de ce siège.

L'avance d'un tel siège est effectuée avec le dossier du siège replié afin de permettre à un utilisateur d'accéder à des places arrières du véhicule et le recul d'un tel siège est déclenché quand le dossier occupe sa position de conduite afin de permettre au passager avant de s'asseoir sur ce siège.

Document DE 199 39 183, qui décrit toutes les caractéristiques du préambule de la revendication 1, montre un tel siège.

Une telle commande a donné satisfaction dans son fonctionnement mécanique mais il se pose un problème de sécurité lors du déplacement du siège.

En effet, lors du recul du siège, les pieds d'un occupant éventuel du siège arrière peuvent être heurtés par le siège et lors de l'avancée du siège, il existe un risque de collision entre ce siège et des parties avant du véhicule telles que le pavillon ou le pare-soleil.

La présente invention a pour but de sécuriser les mouvements d'avance et de recul du siège afin qu'il n'existe pas d'interférence du siège avec des éléments du véhicule ou des passagers, ces mouvements d'avance et de recul pouvant être alors effectués plus rapidement en toute sécurité.

A cet effet, l'invention a pour objet un dispositif de commande d'un siège motorisé de véhicule automobile, ce siège comportant une assise portant un dossier basculant entre une position de conduite et une position rabattue sur l'assise, caractérisé en ce que le déplacement d'avance du siège se décompose en un mouvement horizontal vers l'avant du véhicule simultanément ou suivi d'un mouvement d'abaissement du siège jusqu'à une position minimale d'abaissement, en ce que le déplacement de recul du siège commence par un mouvement de montée du siège simultanément au mouvement horizontal du siège vers l'arrière du véhicule, les déplacements d'avance et de recul du siège étant effectués par des moyens de motorisation spécifiques selon le mouvement horizontal ou de montée/abaissement du siège effectué, ces moyens de motorisation étant commandés par une unité de commande.

Selon d'autres caractéristiques additionnelles :
- lors du déplacement d'avance du siège, le mouvement d'abaissement est initié par l'unité de commande après une distance préétablie parcourue lors du mouvement horizontal vers l'avant, ce mouvement horizontal pour le déplacement vers l'avant est un mouvement rapide limité par une butée mécanique en fin de course et le déplacement du siège vers l'avant peut comprendre un troisième mouvement horizontal rapide, dans le cas où la butée mécanique pour ce mouvement n'est pas atteinte à la fin du mouvement d'abaissement du siège effectué simultanément avec le premier mouvement horizontal du siège,
- le déplacement de recul du siège se compose au départ d'un mouvement de montée du siège simultanément à un mouvement horizontal rapide du siège vers l'arrière, se poursuit par un mouvement horizontal rapide du siège lorsque les moyens de motorisation de montée du siège sont arrêtés par le contact avec une butée de fin de course correspondant à une position normale de hauteur du siège pendant la marche du véhicule, ce mouvement horizontal rapide étant lui-même limité par une butée de fin de course associée correpondant à la position de conduite,
- le dispositif comprend un capteur apte à délivrer un signal représentatif de l'état droit du dossier, l'unité de commande déclenchant le déplacement automatique du siège lorsque le signal que le dossier est replié lui est transmis, ce déplacement vers une position avancée permettant à un utilisateur d'accéder aux places arrières du véhicule, et/ou il comprend en outre un interrupteur électrique pour que l'unité de commande provoque le retour du siège lorsque cet interrupteur est actionné par un utilisateur,
- l'interrupteur est un bouton poussoir implanté dans le dossier du siège, de préférence au niveau de l'appui tête du dossier du siège,
- l'unité de commande est reliée à des éléments tels qu'un ou des capteurs, un ou des interrupteurs, une ou des butées électroniques, cette ou ces butées électroniques étant fictives et préenregistrées dans un boîtier de mémorisation présent au sein de l'unité de commande, afin de procéder au déplacement d'avance ou de recul du siège en fonction des signaux issus de ces divers éléments par commande des moyens de motorisation du siège spécifiques pour chaque mouvement composant les déplacements d'avance et de recul de siège,
- lors du déplacement d'avance du siège, le mouvement d'abaissement du siège est commandé par l'unité de commande suite à un signal d'une butée électronique,
- le dispositif comprend un capteur de présence apte à délivrer un signal représentatif d'un capteur indiquant que le moteur tourne ou que la clé de contact est tournée et/ou un capteur délivrant un signal représentatif de l'état bouclé d'une ceinture de sécurité équipant ce siège afin que l'unité de commande puisse interdire le déclenchement de l'avance ou du recul du siège si l'une ou plusieurs de ces conditions sont remplies, et/ou un capteur représentatif de la vitesse du véhicule pour interdire le déclenchement de l'avance ou du recul du siège lorsque le véhicule a une vitesse non nulle,
- pour le mouvement horizontal avant ou arrière du siège, son assise est montée sur chacun de ses côtés latéraux sur un rail afin de pouvoir coulisser vers l'avant ou vers l'arrière, selon sa position, sur une glissière de plancher respective, un moteur entraînant une vis sans fin coulissante dans chaque glissière de plancher, celle-ci étant fixe et contenant un cran engrené par la vis coopérant avec le rail,
- le mouvement de montée ou d'abaissement de l'assise de siège est effectué par un moyen de transmission, mobile sur une glissière de plancher disposée latéralement sur chaque côté de l'assise de siège, ce moyen de transmission comportant, à une de ses extrémités, un moyen de roulement pouvant se déplacer sur un bord supérieur de la glissière de plancher, ce moyen de roulement étant relié d'autre part à une bielle pouvant tourner autour d'un axe disposé sur une base de l'assise de siège, cette base étant solidaire du rail, l'extrémité supérieure de cette bielle étant fixée à l'angle de l'assise de siège se trouvant juste au-dessus de la bielle, le déplacement du moyen de transmission entraînant la rotation de la bielle et le mouvement de montée/abaissement correspondant de l'assise de siège,
- le moyen de transmission est un fourreau cranté avec comme moyen de roulement un galet de roulement, ce fourreau recevant une vis sans fin montée mobile dans ce fourreau, cette vis sans fin tournant sous l'action d'un vérin moteur dans le fourreau cranté et provoquant la translation horizontale du galet de roulement sur la glissière de plancher et consécutivement la rotation de la bielle,
- l'assise de siège comprend des bielles libres sur ses trois autres angles,
- lors du déplacement d'avance du siège, le mouvement d'abaissement du siège est initié environ 12 cm avant l'extrémité longitudinale avant de la glissière de plancher ou, le cas échéant, avant la butée mécanique disposée à l'avant de la glissière de plancher,
- l'unité de commande pilote le mouvement d'abaissement jusqu'à une butée mécanique basse et termine le mouvement de translation horizontale jusqu'à une butée mécanique avant si ce mouvement n'est pas déjà arrivé en butée électronique, selon les données entrées dans le boîtier de mémorisation de l'unité de commande,
- la butée électronique du mouvement horizontal de translation vers l'avant est située avant la butée mécanique de la glissière de plancher, préférentiellement mais pas exclusivement approximativement à 15 pas de vis de la vis coopérant avec le moteur,
- les butées mécaniques du mouvement horizontal de translation du rail sur la glissière de plancher sont disposées aux extrémités longitudinales de chaque glissière sous forme de parties saillantes sur le chemin de mouvement du rail sur la glissière de plancher et les butées mécaniques du mouvement d'abaissement et de montée du siège sont, pour l'abaissement, sous la forme d'une bague disposée à l'extrémité du fourreau présentant la vis sans fin pour limiter la rentrée de cette vis dans le fourreau et, pour la montée, sous la forme d'une butée limitant la rotation de la bielle en rotation autour de l'axe.

L'invention concerne aussi un dispositif de commande d'un siège motorisé de véhicule automobile, ce siège comportant une assise portant un dossier basculant entre une position de conduite droite et une position rabattue sur l'assise, caractérisé en ce que le déplacement d'avance du siège se décompose en d'une part un mouvement horizontal vers l'avant du véhicule et d'autre part un mouvement d'abaissement du siège, et en ce que le déplacement de recul du siège se décompose en d'une part un mouvement de montée du siège et d'autre part un mouvement horizontal du siège vers l'arrière du véhicule, les déplacements d'avance et de recul du siège étant effectués par des moyens de motorisation et un siège motorisé comprenant un tel dispositif.

L'invention concerne également un véhicule automobile comprenant un dispositif de commande tel que précédemment défini.

L'invention va maintenant être décrite plus en détail mais de façon non limitative en regard des figures annexées, dans lesquelles :
- la figure 1 illustre des courbes de la course de montée/abaissement du siège et de la course horizontale ainsi qu'une décomposition du déplacement d'avance en mouvements de translation horizontale et d'abaissement du siège effectués par le siège selon sa position d'avance,
- la figure 2 illustre des courbes de la course de montée/abaissement et de la course horizontale et une décomposition du déplacement de recul en mouvements de translation horizontale et montée du siège effectués par le siège selon sa position de recul,
- la figure 3 est une vue en perspective de l'avant du siège montrant les moyens mécaniques de déplacement de translation horizontale,
- la figure 4 est une vue en perspective du dessous du siège montrant les moyens mécaniques de déplacement de montée ou d'abaissement du siège,
- la figure 5 est une section latérale d'une glissière de plancher avec son rail respectif de siège montrant les moyens de butée mécanique limitant le déplacement horizontal du siège.

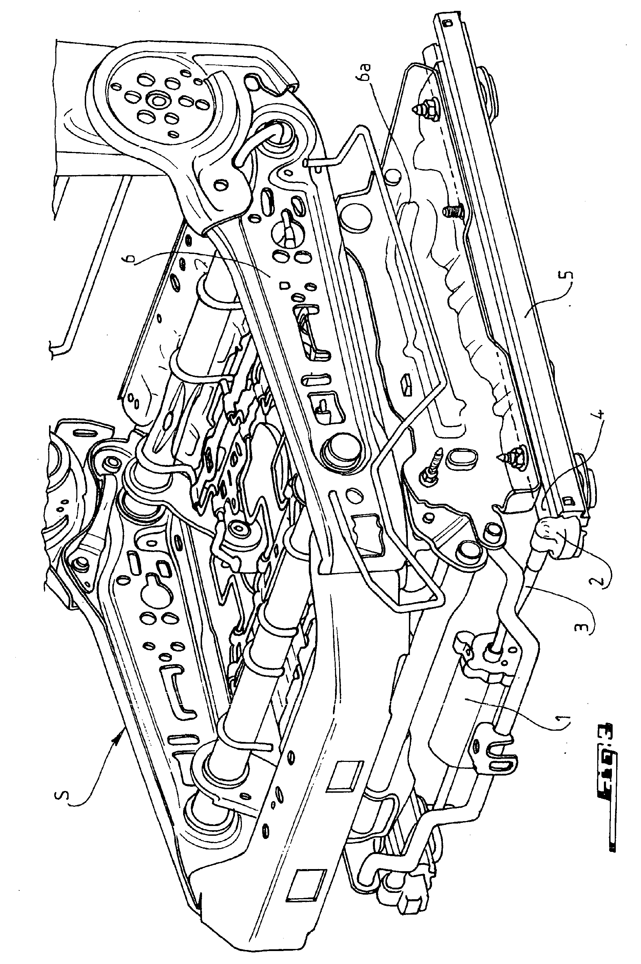

Pour la définition du cadre de l'invention et non montré aux figures, le siège comporte une assise portant un dossier basculant entre une position droite et une position rabattue sur l'assise. L'assise de siège comprend des moyens de motorisation pour son déplacement, qui seront montrés aux figures 3 à 5. Ces moyens de motorisation sont commandés par une unité de commande selon des paramètres sélectionnés comme il sera décrit plus loin.

Le siège peut être déplacé vers l'avant pour permettre l'accès, par exemple via une porte latérale, à des places arrière du véhicule puis déplacé vers l'arrière pour être remis en position qui correspond à la position qu'il occupe quand le véhicule roule.

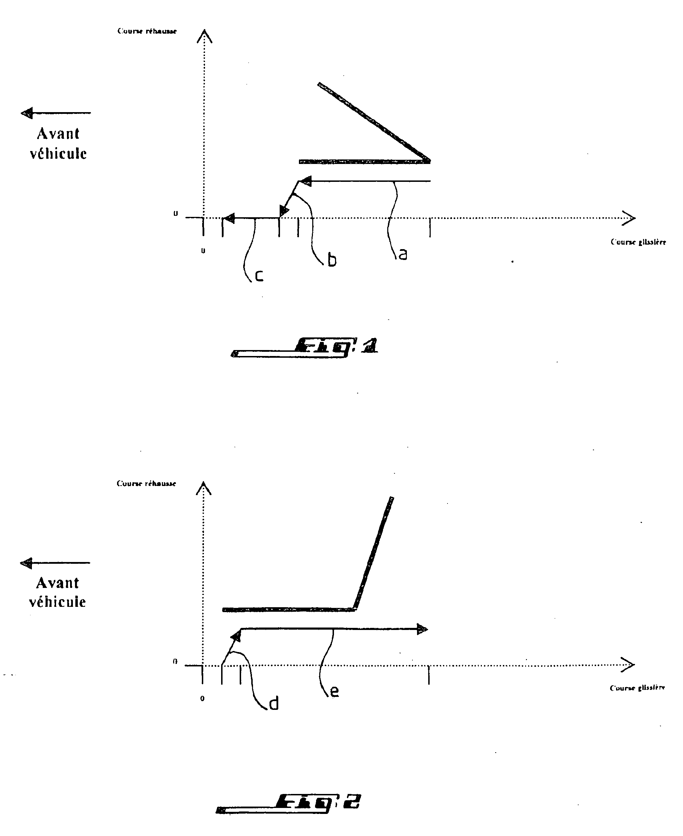

Comme il est montré à la figure 1, le déplacement d'avance selon la présente invention se décompose en un mouvement horizontal de translation a par avance rapide du siège, par exemple par coulissement d'un rail sur une glissière, puis par un mouvement b résultant de ce mouvement horizontal de translation simultanément avec un mouvement d'abaissement du siège. Ce mouvement d'abaissement est initié automatiquement par l'unité de commande dès que le siège dans son mouvement horizontal a parcourt une certaine distance ou dès le départ selon les véhicules. La détection de la distance horizontale parcourue peut être obtenue par une butée électronique fictive ou une butée mécanique. Dans le cas d'une butée électronique fictive, celle-ci est préenregistrée au sein d'un boîtier de mémorisation de l'unité de commande et correspond par exemple à la distance parcourue depuis le début du mouvement du siège, à la distance encore à parcourir ou à une autre valeur représentative du mouvement du siège. Le déplacement de l'assise de siège vers l'avant peut comprendre un troisième mouvement c s'effectuant horizontalement si la butée mécanique n'est pas atteinte à la fin du mouvement ou alors, si c'est le mouvement horizontal qui s'est terminé avant la fin du mouvement d'abaissement, on observera un mouvement vertical b composé d'un mouvement d'abaissement du siège effectué simultanément au mouvement horizontal du siège.

Il est à signaler que les mouvements de montée ou d'abaissement du siège sont aussi appelés mouvements de réhausse haute et basse de ce siège comme il est indiqué aux figures 1 et 2.

Conformément à la figure 2, le déplacement de recul selon la présente invention se décompose en un mouvement d avec une composante horizontale de translation par recul rapide du siège, associée à une composante de montée du siège. Une fois la hauteur de rehausse souhaitée obtenue, c'est-à-dire en général la hauteur du siège quand le véhicule roule, le déplacement de recul s'effectue selon un mouvement e horizontal de translation par recul rapide du siège jusqu'à ce qu'un moyen de déplacement atteigne une butée située en fin de mouvement horizontal.

Les mouvements d'avance et de recul sont donc limités par des butées de fin de course. Ces butées pourront être sous la forme de butées mécaniques ou de butées électroniques fictives. Il en va de même pour les mouvements de remontée ou de descente du siège. Toutes ces butées seront détaillées plus loin.

Pour améliorer la sécurité du déplacement du siège, le dispositif selon l'invention comprend des capteurs délivrant un signal à l'unité de commande des signaux représentatifs des divers paramètres du siège. Ces capteurs peuvent être situés à divers endroits de l'assise de siège, sur le parcours de déplacement horizontal et/ou des capteurs de position de parties de l'assise de siège, par exemple un capteur apte à délivrer un signal représentatif de l'état droit du dossier, le déclenchement du déplacement automatique de l'ensemble du siège étant commandé par l'unité de commande seulement lorsque le dossier est replié.

Des moyens d'empêchement de déplacement du siège sont aussi prévus pour la sécurité des passagers et le bon fonctionnement des déplacements. Le dispositif peut par exemple comprendre aussi un ou des capteurs de présence aptes à délivrer un signal représentatif de la présence d'un occupant dans le siège pour interdire le déclenchement de l'avance ou du recul du siège lorsqu'un occupant est assis dans le siège, lorsque le moteur tourne ou lorsque la clé de contact est tournée et/ou un capteur représentatif de la vitesse du véhicule pour interdire le déclenchement de l'avance ou du recul du siège lorsque le véhicule a une vitesse non nulle et/ou un capteur délivrant un signal représentatif de l'état bouclé d'une ceinture de sécurité équipant ce siège.

Le dispositif peut comprendre aussi un interrupteur électrique pour provoquer le retour du siège lorsque celui-ci est actionné alors que le dossier occupe sa position droite. Cet interrupteur peut être sous la forme d'un bouton poussoir implanté dans le dossier du siège, de préférence au niveau de l'appui tête du dossier du siège et manipulable par un utilisateur.

Dans une forme de réalisation de l'invention, quand l'unité de commande détecte que le bouton poussoir est enfoncé alors que le capteur de position du dossier délivre un signal représentatif de l'état droit du dossier, celle-ci pilote les moyens de motorisation pour qu'ils reculent le siège soit jusqu'à ce qu'il atteigne sa position normale correspondant à sa position en marche du véhicule ou soit jusqu'à ce que le bouton poussoir ne soit plus pressé par l'utilisateur.

Du fait de cette disposition, si le recul du siège interfère avec un occupant assis à l'arrière du véhicule, notamment avec les pieds ou les jambes de celui-ci, il suffit de relâcher le bouton poussoir pour arrêter immédiatement le mouvement du siège.

La position du bouton poussoir est importante pour garantir son accès à un passager arrière ou à une personne accédant au véhicule par une porte avant. C'est pourquoi ce bouton poussoir est de préférence disposé sur la face latérale externe de l'appui-tête.

Le but des moyens d'empêchement de déplacement du siège est de ne pas avoir un déplacement intempestif du siège, par exemple pendant la conduite du véhicule même si le bouton poussoir est poussé par inadvertance. Ce push est optionnel et concerne surtout les petits véhicules. Sur d'autres véhicules, le mouvement d'avance et d'abaissement peut être automatique mais aussi le mouvement de retour en position de conduite. Dans ce cas là, il suffit juste de remettre le dossier en position dite de conduite et le siège effectue son mouvement de retour en position de conduite de façon entièrement automatique.

En situation d'utilisation, le siège occupe une position dite normale dans laquelle un occupant peut s'installer.

Ce siège est du type motorisé, c'est-à-dire que son déplacement depuis la position normale vers la position avant et depuis la position avant vers la position normale est assuré par des moyens de motorisation pilotés via une unité de commande, soit automatiquement comme dans le déplacement d'avance du siège, soit lorsque ce dispositif est sollicité par un utilisateur, comme dans le déplacement de recul du siège.

Les moyens de motorisation sont donc avantageusement pilotés par l'unité de commande afin que l'avance soit du type rapide de manière à minimiser le temps d'accès aux places arrière. En effet, lorsque le siège avance, le fait que le dossier est rabattu est suffisant pour considérer que le siège est vide, c'est-à-dire que cette avance rapide ne présente pas de risque pour un utilisateur, donc une confirmation du déplacement par un utilisateur n'est pas nécessaire.

Ce n'est pas le cas pour la commande de recul du siège qui nécessite au moins que deux conditions soient remplies Ceci est particulièrement vrai dans le cas de petits véhicules où le passager arrière peut se voir coincer lors du mouvement de retour du siège. On considère qu'il n'y a pas ce risque dans les véhicules de grande taille et donc dans ce cas, pas de push pour le retour du siège, juste un mouvement automatique, à savoir un interrupteur non représenté, étant un bouton poussoir implanté dans le dossier pouvant être enfoncé afin que le dossier soit droit.

A la figure 3, est représenté un siège S avant équipant un véhicule automobile par exemple de type coupé ou trois portes, ce siège S étant mobile vers l'avant pour permettre l'accès, via une porte latérale, à des places arrière du véhicule.

Ce siège S comprend une assise de siège 6 de forme sensiblement rectangulaire portant un dossier basculant pouvant inclure un appui-tête. L'assise 6 de siège peut se déplacer horizontalement et verticalement avec sur chacun de ses côtés latéraux une base 6a d'assise de siège solidarisée avec un rail 4 respectif pour pouvoir coulisser vers l'avant ou vers l'arrière selon sa position sur une glissière de plancher 5 respective dans un mouvement sensiblement horizontal. On voit que ces deux bases 6a d'assise de siège de chaque côté de l'assise de siège 6 ne peuvent pas se déplacer verticalement car fixées chacune à son rail 4 respectif. Le mouvement horizontal de l'assise 6 de siège est réalisé par un moteur 1 l'entraînant de chacun de ses côtés latéraux dans un sens avant ou arrière selon que le siège doit être avancé ou reculé par l'intermédiaire d'un moyen réducteur/renvoi 2 relié au moteur 1 par un câble gainé 3. Ce moyen réducteur/renvoi 2 entraîne une vis sans fin non visible sur cette figure car contenue dans chaque rail 4 coulissant dans la glissière respective de plancher 5. Cette glissière de plancher 5 est fixe et contient un cran engrené par la vis ce qui permet de faire avancer ou reculer le siège.

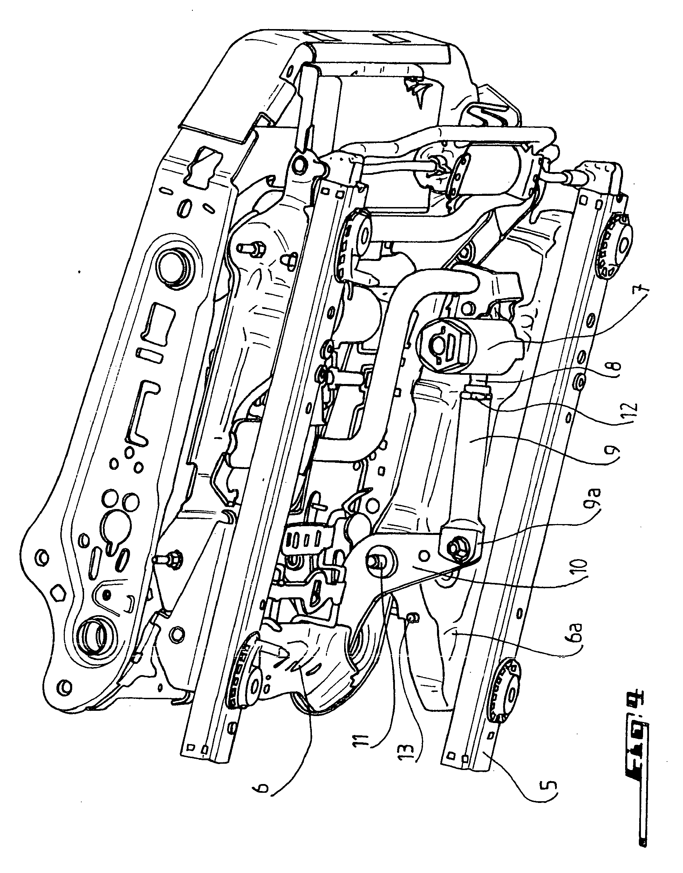

La figure 4 montre les moyens mécaniques pour effectuer le mouvement de montée ou d'abaissement du siège. Sur une des glissières de plancher 5 latérales du siège se trouve un fourreau cranté 9 qui comporte à une de ses extrémités un galet de roulement 9a pouvant se déplacer sur un bord supérieur de la glissière de plancher 5. Ce galet de roulement 9a est relié, d'autre part, à une bielle 10 qui peut tourner autour d'un axe 11 disposé horizontalement et transversalement à l'assise de siège sur la base 6a de celle-ci qui est fixée au rail 4, l'extrémité supérieure de cette bielle 10 étant fixée à l'angle de l'assise 6 de siège se trouvant juste au dessus de la bielle 10.

Le fonctionnement des moyens mécaniques pour la montée ou l'abaissement du siège est le suivant : un vérin moteur 7 fait tourner une vis sans fin 8 dans un sens ou dans l'autre selon que l'on veut faire monter l'assise 6 de siège ou le descendre. Cette vis sans fin 8 tourne dans le fourreau cranté 9 engrené sur celle-ci. Le fourreau 9 se translate horizontalement par l'intermédiaire de son galet de roulement 9a sur le bord de la glissière de plancher 5 et entraîne ainsi la bielle 10 en la faisant tourner autour de son axe de rotation 11 disposé sur la base fixe 6a de l'assise 6 de siège. Ceci a pour conséquence d'assurer la montée ou l'abaissement de l'assise 6 de siège. Cette assise 6 de siège sensiblement rectangulaire, comme déjà précisé, comprend pour ses trois autres angles des bielles libres suivant le mouvement de montée ou d'abaissement du siège de l'angle de l'assise 6 de siège avec la bielle 10 actionnée.

Des moyens de butée sont prévus sur ces moyens de motorisation pour limiter le mouvement d'abaissement ou de montée de l'assise 6 de siège. Ces moyens de butée sont constitués pour l'abaissement d'une bague 12 disposé sur à l'extrémité du fourreau 9 présentant la vis sans fin 8. Pour la limitation du mouvement de montée de l'assise 6 de siège quand le moteur vérin 7 fait tourner la vis sans fin 8 dans l'autre sens, le fourreau 9 ne contiendra plus qu'une petite partie de la vis sans fin 8 et s'avancera sur la glissière de plancher 5 en entraînant la bielle 10 en rotation autour de l'axe 11, une butée 13 est prévue sur la base fixe 6a de l'assise de siège pour limiter la rotation de cette bielle 10 dans le sens de la montée de l'assise 6 de siège.

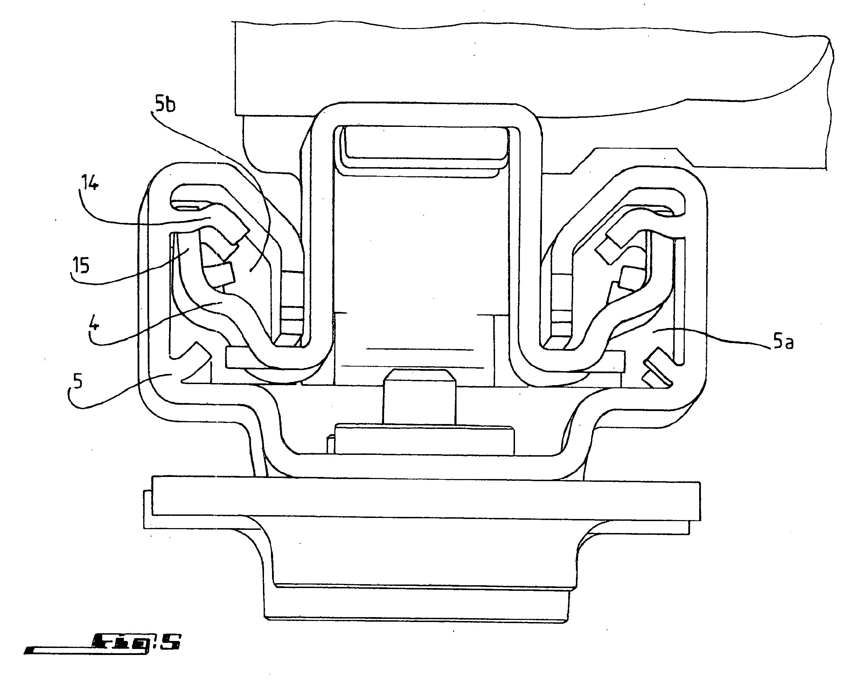

La figure 5 montre la liaison entre la glissière 5 et son rail 4 respectif de même que les dispositifs de butée de ces deux éléments entre eux pour la limitation du déplacement horizontal de l'assise 6 de siège. Dans une forme de réalisation de l'invention, la glissière de plancher 5 présente en section deux boucles dans chacune desquelles se trouve la partie d'extrémité latérale respective du rail 4.

Le rail 4 glisse par la base de ses parties d'extrémité latérale dans le bas de la boucle 5a ou 5b respective de la glissière de plancher 5. Le roulement de cette base du rail 4 dans la glissière 5 peut être amélioré en prévoyant des moyens additionnels de roulement, par exemple, des billes ou des galets ou en employant un matériau pour les parties en contact du rail 4 et/ou de la glissière 5 présentant un coefficient de frottement diminué.

La limitation du déplacement horizontal est effectuée par une partie 14 faisant saillie du bord latéral de chaque boucle 5a ou 5b de la glissière 5 de plancher sur chacune de ses extrémités longitudinales et rentrant en contact avec l'extrémité 15 latérale correspondante du rail 4. Ainsi la limitation du déplacement dans le sens de sa longueur de l'assise 6 de siège est effectuée.

Le déclenchement d'abaissement du siège dans le déplacement d'avance du siège peut être initié par une butée électronique fictive en fonction du nombre de pas de vis accomplis par la vis associée au moteur 1 et au moyen réducteur/renvoi 2, cette donnée étant transmise à l'unité de commande par un moyen de contrôle adéquat et comparée avec un nombre de pas de vis préenregistré dans le boîtier de mémorisation, ce nombre de pas de vis accomplis étant en relation avec la distance parcourue ou à parcourir. Il est possible aussi d'utiliser un capteur de passage du rail 4, notamment de son extrémité avant, sur la glissière de plancher 5. Ceci peut être réalisé par un moyen électronique du genre cellule photoélectrique ou par une butée mécanique sous la forme d'un élément rétractile n'empêchant pas le mouvement de translation horizontal de continuer, cette butée mécanique étant associée à un moyen de signalement à l'unité de commande de la position d'avancement du rail 4, qui commande alors le déclenchement du mouvement de d'abaissement du siège.

Le fonctionnement d'une butée électronique représentative de celles pouvant être employées dans le présent dispositif est le suivant : cette butée électronique consiste en la saisie, notamment par un capteur ou une sonde, d'au moins une donnée opérationnelle relative au mouvement accompli ou à un paramètre de l'assise de siège, un signal représentatif de cette donnée étant transmis à l'unité de commande et cette donnée étant alors comparée à une donnée préenregistrée dans le boîtier de mémorisation présent au sein de l'unité de commande afin de procéder à une opération prédéterminée sur le siège, par exemple l'avance ou au recul du siège si la donnée du signal correspond à la donnée préalablement mémorisée. La butée électronique fictive peut être préférée étant donné qu'elle ne nécessite qu'un changement de la donnée préenregistrée dans le boîtier de mémorisation et non le changement de place d'une butée ou d'un capteur sur le passage du rail 4 dans la glissière de plancher 5 ce qui peut être plus difficile à effectuer. Une butée électronique peut aussi être utilisée en complément d'une butée mécanique, pour assurer plus de sécurité dans le mouvement. En fait la butée électronique est surtout là pour ne pas user à long terme la butée mécanique à force de chocs répétitifs. Par exemple lors du déplacement d'avance, le mouvement horizontal de translation du rail 4 sur la glissière de plancher 5 est contrôlé par une butée mécanique 14 et une butée électronique, ce mouvement continuant jusqu'à la butée mécanique 14 si la butée électronique n'a pas été atteinte avant. Le mouvement est censé s'arrêter lors de l'atteinte de la butée électronique ceci justement afin de ne pas atteindre la butée mécanique pour ne pas l'user.

Dans un mode de réalisation préférentielle de l'invention, pour le déplacement d'avance, une certaine distance prédéterminée avant la butée mécanique avant et simultanément avec le mouvement horizontal de translation du rail 4 sur la glissière de plancher 5, le boîtier de mémorisation pilote le mouvement d'abaissement du siège jusqu'à la butée mécanique 12 basse puis termine le mouvement en translation horizontale ou l'inverse du rail 4 sur la glissière de plancher 5 jusqu'à la butée mécanique 14 du mouvement horizontal si celui-ci n'est pas arrivé en butée électrique avant.

Il est avantageux de prendre comme distance prédéterminée préférentiellement mais pas exclusivement une distance d'environ 12 cm.

Le dispositif selon l'invention permet un déplacement plus sécurisé d'un siège de véhicule, ce déplacement pouvant se faire plus rapidement.

L'invention n'est nullement limitée au mode de réalisation décrit et illustré qui n'a été donné qu'à titre d'exemple.

## Revendications

1. Siège motorisé de véhicule automobile avec un dispositif de commande d'un siège motorisé de véhicule automobile, ce siège comportant une assise portant un dossier basculant entre une position droite et une position rabattue sur l'assise, **caractérisé en ce que** le déplacement d'avance du siège se décompose en un mouvement horizontal (a) vers l'avant du véhicule simultanément avec ou suivi d'un mouvement (b) composé d'un mouvement d'abaissement du siège jusqu'à une position minimale, **en ce que** le déplacement de recul du siège commence par un mouvement (d) combinant un mouvement de montée du siège simultanément à un mouvement horizontal du siège vers l'arrière du véhicule, les déplacements d'avance et de recul du siège étant effectués par des moyens de motorisation (1, 4, 5 et 7, 8, 9) spécifiques selon le mouvement horizontal ou de montée/abaissement du siège effectué, ces moyens de motorisation étant commandés par une unité de commande , **en ce que** le déclenchement du déplacement automatique est commandé par l'unité de commande seulement lorsque le dossier est replié, **en ce que** le mouvement de retour est effectué quand le dossier est remis en position de conduite, et **en ce que**, lors du déplacement d'avance du siège, le mouvement d'abaissement est initié par l'unité de commande selon une distance préétablie parcourue lors du mouvement horizontal vers l'avant cette distance pouvant être nulle, **en ce que** le mouvement horizontal (a) pour le déplacement vers l'avant est un mouvement rapide limité par une butée mécanique (14) et **en ce que** le déplacement du siège (S) vers l'avant peut comprendre un troisième mouvement (c) horizontal rapide, dans le cas où la butée mécanique (14) de fin de course pour ce mouvement n'est pas atteinte à la fin du mouvement d'abaissement du siège, effectué simultanément avec le premier mouvement (a) horizontal du siège.

2. Siège selon la revendication 1, **caractérisé en ce que** le déplacement de recul du siège se compose au départ d'un mouvement (d) avec montée du siège simultanément à un mouvement horizontal rapide du siège (S) vers l'arrière se poursuit par un mouvement horizontal (e) rapide du siège (S) lorsque les moyens de motorisation de montée du siège sont arrêtés par le contact avec une butée (11) de fin de course correspondant à une position normale de hauteur du siège pendant la marche du véhicule, ce mouvement horizontal (c) rapide étant limité par une butée de fin de course (14) respective.

3. Siège selon l'une quelconque des revendications, **caractérisé en ce qu'**il comprend un capteur apte à délivrer un signal représentatif de l'état droit du dossier, l'unité de commande déclenchant le déplacement automatique du siège, lorsque le signal que le dossier est replié lui est transmis, ce déplacement vers une position avancée permettant à un utilisateur d'accéder aux places arrières du véhicule, et/ou **en ce qu'**il comprend en outre un interrupteur électrique pour que l'unité de commande provoque le retour du siège lorsque cet interrupteur est actionné par un utilisateur.

4. Siège selon la revendication 3, **caractérisé en ce que** l'interrupteur est un bouton poussoir implanté dans le dossier du siège, de préférence au niveau de l'appui tête du dossier du siège.

5. Siège selon l'une quelconque des revendications précédentes, **caractérisé en ce que** l'unité de commande est reliée à des éléments tels qu'un ou des capteurs, un ou des interrupteurs, une ou des butées électroniques, cette ou ces butées électroniques étant fictives et préenregistrées dans un boîtier de mémorisation présent au sein de l'unité de commande, afin de procéder au déplacement d'avance ou de recul du siège en fonction des signaux issus de ces divers éléments par commande des moyens de motorisation du siège spécifiques pour chaque mouvement composant les déplacements d'avance et de recul de siège.

6. Siège selon la revendication 5, **caractérisé en ce que**, lors du déplacement d'avance du siège, le mouvement d'abaissement du siège est commandé par l'unité de commande suite à un signal d'une butée électronique.

7. Siège selon la revendication 5 ou 6, **caractérisé en ce qu'**il comprend un capteur de présence apte à délivrer un signal représentatif de la présence d'un occupant dans le siège et/ou un capteur indiquant que le moteur tourne ou que la clé de contact est tournée et/ou un capteur délivrant un signal représentatif de l'état bouclé d'une ceinture de sécurité équipant ce siège afin que l'unité de commande puisse interdire le déclenchement de l'avance ou du recul du siège si l'une ou plusieurs de ces conditions sont remplies, et/ou un capteur représentatif de la vitesse du véhicule pour interdire le déclenchement de l'avance ou du recul du siège lorsque le véhicule a une vitesse non nulle.

8. Siège selon l'une quelconque des revendications précédentes, **caractérisé en ce que** pour le mouvement horizontal avant ou arrière du siège, son assise (6) est montée sur chacun de ses côtés latéraux sur un rail (4) afin de pouvoir coulisser vers l'avant ou vers l'arrière, selon sa position, sur une glissière de plancher (5) respective, un moteur (1) entraînant une vis sans fin coulissante dans chaque glissière de plancher (5), celle-ci étant fixe et contenant un cran engrené par la vis coopérant avec le rail (4).

9. Siège selon l'une quelconque des revendications précédentes, **caractérisé en ce que** le mouvement de montée ou d'abaissement de l'assise de siège est effectué par un moyen de transmission (9), mobile sur une glissière de plancher (5) disposée latéralement sur chaque côté de l'assise (6) de siège, ce moyen de transmission (9) comportant à une de ses extrémités un moyen de roulement (9a) pouvant se déplacer sur un bord supérieur de la glissière de plancher (5), ce moyen de roulement (9a) étant relié d'autre part à une bielle (10) pouvant tourner autour d'un axe (11) disposé sur une base (6a) de l'assise (6) de siège, cette base (6a) étant solidaire du rail (4), l'extrémité supérieure de cette bielle (10) étant fixée à l'angle de l'assise (6) de siège se trouvant juste au dessus de la bielle (10), le déplacement du moyen de transmission (9) entraînant la rotation de la bielle (10) et le mouvement de montée/abaissement correspondant de l'assise (6) de siège.

10. Siège selon la revendication précédente, **caractérisé en ce que** le moyen de transmission est un fourreau (9) cranté avec comme moyen de roulement un galet de roulement (9a), ce fourreau (9) recevant une vis sans fin montée mobile dans ce fourreau (9), cette vis sans fin tournant sous l'action d'un vérin moteur (7) dans le fourreau cranté (9) et provoquant la translation horizontale du galet de roulement (9a) sur la glissière de plancher et consécutivement la rotation de la bielle (10).

11. Siège selon la revendication précédente, **caractérisé en ce que** l'assise de siège comprend des bielles libres sur ses trois autres angles.

12. Siège selon l'une quelconque des revendications précédentes, **caractérisé en ce que**, lors du déplacement d'avance du siège, le mouvement d'abaissement du siège est initié environ 12 cm avant l'extrémité longitudinale avant de la glissière de plancher (5) ou, le cas échéant, avant la butée mécanique (14) disposée à l'avant de la glissière de plancher (5).

13. Siège selon la revendication 12, **caractérisé en ce que** l'unité de commande pilote le mouvement d'abaissement du siège jusqu'à une butée mécanique basse (12) d'abaissement et termine le mouvement de translation horizontale jusqu'à une butée mécanique ou électronique avant (14) si ce mouvement n'est pas déjà arrivé en butée électronique, selon les données entrées dans le boîtier de mémorisation de l'unité de commande.

14. Siège selon la revendication 13, **caractérisé en ce que** la butée électronique du mouvement horizontal de translation vers l'avant est située avant la butée mécanique (14)de la glissière de plancher (5), préférentiellement mais pas exclusivement approximativement à 15 pas de vis de la vis coopérant avec le moteur (1) cette valeur étant dépendante du siège utilisé.

15. Siège selon l'une quelconque des revendications 13 à 14, **caractérisé en ce que** les butées mécaniques (14) du mouvement horizontal de translation du rail (4) sur la glissière de plancher (5) sont disposées aux extrémités longitudinales de chaque glissière sous forme de parties saillantes sur le chemin de mouvement du rail sur la glissière (5) de plancher faisant butée contre une partie (15) respective du rail (4) et **en ce que** les butées mécaniques du mouvement d'abaissement et de montée du siège sont, pour l'abaissement du siège, sous la forme d'une bague (12) disposée à l'extrémité du fourreau (9) présentant la vis sans fin pour limiter la rentrée de cette vis dans le fourreau (9) et, pour la montée du siège, sous la forme d'une butée (13) limitant la rotation de la bielle (10) en rotation autour de l'axe (11).

16. Véhicule automobile comprenant un siège selon l'une quelconque des revendications précédentes.

## Claims

1. A motorised seat for a motor vehicle with a control device of a motorised seat for a motor vehicle, this seat comprising a seating portion carrying a back rocking between an upright position and a folded position on the seating portion, **characterized in that** the forward displacement of the seat is broken down into a horizontal movement (a) towards the front of the vehicle simultaneously with or followed by a movement (b) composed of a lowering movement of the seat to a minimal position, **in that** the backward displacement of the seat begins by a movement (d) combining a rising movement of the seat simultaneously to a horizontal movement of the seat towards the rear of the vehicle, the forward and backward displacements of the seat being carried out by specific motorisation means (1, 4, 5 and 7, 8, 9) according to the horizontal or rising/lowering movement of the seat which is carried out, these motorisation means being controlled by a control unit, **in that** the triggering of the automatic displacement is controlled by the control unit only when the back is folded back, **in that** the return movement is carried out when the back is returned into the driving position, and **in that**, on the forward displacement of the seat, the lowering movement is initiated by the control unit according to a pre-established distance covered on the horizontal movement towards the front, this distance being able to be zero, **in that** the horizontal movement (a) for the displacement towards the front is a rapid movement limited by a mechanical stop (14) and **in that** the displacement of the seat (S) towards the front can comprise a third rapid horizontal movement (c), in the case where the mechanical stop (14) of the end of travel for this movement is not reached at the end of the lowering movement of the seat, carried out simultaneously with the first horizontal movement (a) of the seat.

2. The seat according to Claim 1, **characterized in that** the backward displacement of the seat is composed at the start of a movement (d) with rising of the seat simultaneously to a rapid horizontal movement of the seat (S) towards the rear, continues by a rapid horizontal movement (e) of the seat (S) when the motorisation means for raising of the seat are arrested by contact with a stop (11) of the end of travel corresponding to a normal height position of the seat whilst the vehicle is travelling, this rapid horizontal movement (c) being limited by a respective end-of-travel stop (14).

3. The seat according to any one of the claims, **characterized in that** it comprises a sensor suited to deliver a representative signal of the upright state of the back, with the control unit triggering the automatic displacement of the seat when the signal that the back is folded back is transmitted thereto, this displacement towards a forward position permitting a user to have access to the rear places of the vehicle, and/or **in that** it further comprises an electrical interrupter so that the control unit causes the return of the seat when this interrupter is actuated by a user.

4. The seat according to Claim 3, **characterized in that** the interrupter is a push button installed in the back of the seat, preferably at the level of the headrest of the back of the seat.

5. The seat according to any one of the preceding claims, **characterized in that** the control unit is connected to elements such as one or more sensors, one or more interrupters, one or more electronic stops, this or these electronic stops being dummy and pre-stored in a storage unit present within the control unit, so as to proceed with the forward or backward displacement of the seat as function of the signals issued from these various elements by command of the specific motorisation means of the seat for each movement composing the forward and backward displacements of the seat.

6. The seat according to Claim 5, **characterized in that**, on the forward displacement of the seat, the lowering movement of the seat is controlled by the control unit following a signal of an electronic stop.

7. The seat according to Claim 5 or 6, **characterized in that** it comprises a presence sensor suited to deliver a representative signal of the presence of an occupant in the seat and/or a sensor indicating that the engine is running or that the ignition key is turned and/or a sensor delivering a representative signal of the buckled state of a safety belt equipping this seat so that the control unit can prohibit the triggering of the forward or backward movement of the seat if one or more of these conditions are fulfilled, and/or a representative sensor of the speed of the vehicle, to prohibit the triggering of the forward or backward movement of the seat when the vehicle has a non-zero speed.

8. The seat according to any one of the preceding claims, **characterized in that** for the front or rear horizontal movement of the seat, its seating portion (6) is mounted on each of its lateral sides on a rail (4) so as to be able to slide towards the front or towards the rear, according to its position, on a respective floor slide (5), with a motor (1) driving a sliding endless screw in each floor slide (5), the latter being fixed and containing a notch engaged by the screw cooperating with the rail (4).

9. The seat according to any one of the preceding claims, **characterized in that** the rising or lowering movement of the seating portion of the seat is carried out by a transmission means (9), movable on a floor slide (5) disposed laterally on each side of the seating portion (6) of the seat, this transmission means (9) comprising at one of its ends a rolling means (9a) being able to move on an upper edge of the floor slide (5), this rolling means (9a) being connected on the other hand to a connecting rod (10) able to turn about an axis (11) disposed on a base (6a) of the seating portion (6) of the seat, this base (6a) being integral with the rail (4), the upper end of this connecting rod (10) being fixed to the angle of the seating portion (6) of the seat, being situated just above the connecting rod (10), the displacement of the transmission means (9) entraining the rotation of the connecting rod (10) and the corresponding rising/lowering movement of the seating portion (6) of the seat.

10. The seat according to the preceding claim, **characterized in that** the transmission means is a notched sleeve (9) with a runner (9a) as rolling means, this sleeve (9) receiving an endless screw mounted movably in this sleeve (9), this endless screw turning under the action of a motor jack (7) in the notched sleeve (9) and causing the horizontal translation of the runner (9a) on the floor slide and consecutively the rotation of the connecting rod (10).

11. The seat according to the preceding claim, **characterized in that** the seating portion of the seat comprises free connecting rods on its three other angles.

12. The seat according to any one of the preceding claims, **characterized in that**, on the forward displacement of the seat, the lowering movement of the seat is initiated approximately 12 cm before the front longitudinal end of the floor slide (5) or, if applicable, before the mechanical stop (14) disposed at the front of the floor slide (5).

13. The seat according to Claim 12, **characterized in that** the control unit guides the lowering movement of the seat up to a bottom mechanical lowering stop (12) and terminates the horizontal translation movement up to a front mechanical or electronic stop (14) if this movement has not already arrived in electronic abutment, according to the data entered into the storage unit of the control unit.

14. The seat according to Claim 13, **characterized in that** the electronic stop of the horizontal translation movement towards the front is situated before the mechanical stop (14) of the floor slide (5), preferably but not exclusively approximately at 15 screw pitches of the screw cooperating with the motor (1), this value being dependent on the seat which is used.

15. The seat according to any one of Claims 13 to 14, **characterized in that** the mechanical stops (14) of the horizontal translation movement of the rail (4) on the floor slide (5) are disposed at the longitudinal ends of each slide in the form of projecting parts on the path of movement of the rail on the floor slide (5), abutting against a respective part (15) of the rail (4) and **in that** the mechanical stops of the lowering movement and of the rising movement of the seat are, for the lowering of the seat, in the form of a ring (12) disposed at the end of the sleeve (9) having the endless screw for limiting the return of this screw in the sleeve (9) and, for the rising of the seat, in the form of a stop (13) limiting the rotation of the connecting rod (10) in rotation about the axis (11).

16. A motor vehicle comprising a seat according to any one of the preceding claims.

## Patentansprüche

1. Motorisierter Kraftfahrzeugsitz mit einer Steuervorrichtung eines motorisierten Kraftfahrzeugsitzes, wobei dieser Sitz eine Sitzfläche aufweist, die eine Rückenlehne aufweist, die zwischen einer aufgerichteten und einer auf die Sitzfläche geklappten Position kippt, **dadurch gekennzeichnet, dass** die Vorwärtsverlagerung des Sitzes in eine horizontale Bewegung (a) zur Vorderseite des Fahrzeugs gleichzeitig mit oder gefolgt von einer Bewegung (b) gegliedert ist, die aus einer Senkbewegung des Sitzes bis zu einer Mindestposition besteht, dass die Rücklaufverlagerung des Sitzes mit einer Bewegung (d) beginnt, die eine Hubbewegung des Sitzes gleichzeitig mit einer horizontalen Bewegung des Sitzes zur Rückseite des Fahrzeugs kombiniert, wobei die Vorlauf- und die Rücklaufbewegung des Sitzes von spezifischen Antriebsmitteln (1, 4, 5 und 7, 8) gemäß der ausgeführten horizontalen Bewegung oder der Hub-/Senkbewegung des Sitzes ausgeführt werden, wobei diese Antriebsmittel von einer Steuereinheit gesteuert werden, dass das Auslösen der automatischen Verlagerung von der Steuereinheit nur gesteuert wird, wenn die Rückenlehne geklappt ist, dass die Rücklaufbewegung ausgeführt wird, wenn die Rückenlehne wieder in Fahrposition gestellt wird und dass die Senkbewegung bei der Vorlaufverlagerung des Sitzes von der Steuereinheit gemäß einer vorab erstellen Entfernung, die bei der horizontalen Bewegung nach vorn durchlaufen wurde, ausgelöst wird, wobei diese Entfernung gleich null sein kann, dass die horizontale Bewegung (a) für die Verlagerung nach vorn eine schnelle Bewegung ist, die von einem mechanischen Anschlag (14) begrenzt wird, und dass die Verlagerung des Sitzes (S) nach vorn eine dritte, horizontale schnelle Bewegung (c) für den Fall erlaubt, in dem der mechanische Endschalteranschlag (14) für diese Bewegung bei der Endbewegung des Senkens des Sitzes, die gleichzeitig mit der ersten horizontalen Bewegung (a) des Sitzes ausgeführt wird, nicht erreicht wird.

2. Sitz nach Anspruch 1, **dadurch gekennzeichnet, dass** die Rücklaufverlagerung des Sitzes am Beginn aus einer Bewegung (d) mit Hub des Sitzes gleichzeitig mit einer schnellen horizontalen Bewegung des Sitzes (S) nach hinten besteht und mit einer schnellen horizontalen Bewegung (e) des Sitzes (S) fortgesetzt wird, wenn die Hubantriebsmittel des Sitzes von dem Kontakt mit einem Endschalteranschlag (11) gestoppt werden, der einer normalen Höhenposition des Sitzes während des Betriebs des Fahrzeugs entspricht, wobei diese schnelle horizontale Bewegung (c) durch einen jeweiligen Endschalteranschlag (14) begrenzt ist.

3. Sitz nach einem der Ansprüche, **dadurch gekennzeichnet, dass** er einen Sensor aufweist, der ein Signal abgeben kann, das für den aufrechten Zustand der Rückenlehne repräsentativ ist, wobei die Steuereinheit die automatische Verlagerung des Sitzes auslöst, wenn ihr das Signal, dass die Rückenlehne geklappt ist, gesendet wird, wobei diese Verlagerung zu einer vorgeschobenen Position es einem Benutzer erlaubt, zu den hinteren Plätzen des Fahrzeugs Zugang zu erhalten, und/oder dass er ferner einen elektrischen Schalter aufweist, damit die Steuereinheit die Rückkehr des Sitzes bewirkt, wenn dieser Schalter von einem Benutzer betätigt wird.

4. Sitz nach Anspruch 3, **dadurch gekennzeichnet, dass** der Schalter ein Druckknopf ist, der in die Rückenlehne des Sitzes eingebaut ist, vorzugsweise auf dem Niveau der Kopfstütze der Rückenlehne des Sitzes.

5. Sitz nach einem der vorhergehenden Ansprüche, **dadurch gekennzeichnet, dass** die Steuereinheit mit Elementen, wie zum Beispiel einem oder den Sensoren, einem oder den Schaltern, einem oder den elektronischen Anschlägen verbunden ist, wobei dieser elektronische Anschlag oder diese elektronischen Anschläge fiktiv und in einem Speichergehäuse, das innerhalb der Steuereinheit vorliegt, vorgespeichert werden, um im Voraus die Verlagerung oder den Rücklauf des Sitzes in Abhängigkeit von den Signalen, die von diesen verschiedenen Elementen stammen, durch Steuern der Antriebsmittel des Sitzes, die für jede Bewegung, die die Vorlaufbewegung und die Rücklaufbewegung des Sitzes bilden, spezifisch sind, auszuführen.

6. Sitz nach Anspruch 5, **dadurch gekennzeichnet, dass** die Senkbewegung des Sitzes bei der Vorlaufverlagerung des Sitzes von der Steuereinheit im Anschluss an ein Signal eines elektronischen Anschlags gesteuert wird.

7. Sitz nach Anspruch 5 oder 6, **dadurch gekennzeichnet, dass** er einen Gegenwartssensor aufweist, der ein Signal liefern kann, das für die Gegenwart eines Insassen auf dem Sitz repräsentativ ist, und/oder einen Sensor, der anzeigt, dass der Motor dreht, oder dass der Zündschlüssel gedreht wird, und/oder einen Sensor, der ein Signal liefert, das für den angeschnallten Zustand eines Sicherheitsgurtes, der diesen Sitz ausstattet, repräsentativ ist, damit die Steuereinheit das Auslösen des Vorlaufs oder des Rücklaufs des Sitzes untersagen kann, wenn eine oder mehrere dieser Bedingungen erfüllt sind, und/oder einen Sensor, der für die Geschwindigkeit des Fahrzeugs repräsentativ ist, um das Auslösen des Vorlaufs oder des Rücklaufs des Sitzes zu untersagen, wenn das Fahrzeug eine Geschwindigkeit hat, die nicht gleich null ist.

8. Sitz nach einem der vorhergehenden Ansprüche, **dadurch gekennzeichnet, dass** seine Sitzfläche (6) für die horizontale Bewegung nach vorn oder hinten des Sitzes auf jeder ihrer Seiten auf eine Schiene (4) montiert ist, um, je nach ihrer Position, auf einer jeweiligen Bodengleitschiene (5) vorwärts oder rückwärts gleiten zu können, wobei ein Motor (1) eine Schnecke antreibt, die in jeder Bodengleitschiene (5) gleitet, wobei diese stationär ist und eine Raste aufweist, in die die Schnecke, die mit der Schiene (4) zusammenwirkt, eingreift.

9. Sitz nach einem der vorhergehenden Ansprüche, **dadurch gekennzeichnet, dass** die Hub- oder Senkbewegung der Sitzfläche des Sitzes durch ein Übertragungsmittel (9) erfolgt, das auf einer Bodengleitschiene (5) beweglich ist, die seitlich auf jeder Seite der Sitzfläche (6) angeordnet ist, wobei dieses Übertragungsmittel (9) an einem seiner Enden ein Rollmittel (9a) aufweist, das sich auf einem oberen Rand der Bodengleitschiene (5) bewegen kann, wobei dieses Rollmittel (9a) andererseits mit einer Pleuelstange (10) verbunden ist, die um eine Achse (11) drehen kann, die auf einer Basis (6a) der Sitzfläche (6) angeordnet ist, wobei diese Basis (6a) mit der Schiene (4) fest verbunden ist, wobei das obere Ende dieser Pleuelstange (10) an der Ecke der Sitzfläche (6) befestigt ist, die sich gleich oberhalb der Pleuelstange (10) befindet, wobei die Verlagerung des Übertragungsmittels (9) das Drehen der Pleuelstange (10) und die entsprechende Hub-/Senkbewegung der Sitzfläche (6) nach sich zieht.

10. Sitz nach dem vorhergehenden Anspruch, **dadurch gekennzeichnet, dass** das Übertragungsmittel eine Rastenhülse (9) ist, die als Rollmittel eine Rollwalze (9a) hat, wobei diese Rastenhülse (9) eine Schnecke aufnimmt, die in dieser Rastenhülse (9) beweglich montiert ist, wobei diese Schnecke unter der Einwirkung eines Antriebszylinders (7) in der Rastenhülse (9) dreht und die horizontale Verschiebung der Rollwalze (9a) auf der Bodengleitschiene und im Anschluss daran das Drehen der Pleuelstange (10) bewirkt.

11. Sitz nach dem vorhergehenden Anspruch, **dadurch gekennzeichnet, dass** die Sitzfläche auf ihren drei anderen Ecken freie Pleuelstangen aufweist.

12. Sitz nach einem der vorhergehenden Ansprüche, **dadurch gekennzeichnet, dass** die Senkbewegung des Sitzes bei der Vorlaufverlagerung des Sitzes etwa 12 cm vor dem vorderen Längsende der Bodengleitschiene (5) ausgelöst wird, oder, gegebenenfalls, vor dem mechanischen Anschlag (14), der an der Vorderseite der Bodengleitschiene (5) angeordnet ist.

13. Sitz nach Anspruch 12, **dadurch gekennzeichnet, dass** die Steuereinheit die Senkbewegung des Sitzes bis zu einem unteren mechanischen Senkanschlag (12) steuert und die horizontale Verschiebungsbewegung je nach den in das Speichergehäuse der Steuereinheit eingegebenen Daten bis zu einem vorderen mechanischen oder elektronischen Anschlag (14) beendet, wenn diese Bewegung nicht bereits am elektronischen Anschlag angelangt ist.

14. Sitz nach Anspruch 13, **dadurch gekennzeichnet, dass** der elektronische Anschlag der horizontalen Verschiebungsbewegung nach vorn vor dem mechanischen Anschlag (14) der Bodengleitschiene (5) liegt, vorzugsweise aber nicht ausschließlich in etwa in 15 Schraubensteigungen von der Schnecke entfernt, die mit dem Motor (1) zusammenwirkt, wobei dieser Wert von dem verwendeten Sitz abhängt.

15. Sitz nach einem der Ansprüche 13 bis 14, **dadurch gekennzeichnet, dass** die mechanischen Anschläge (14) der horizontalen Verschiebungsbewegung der Schiene (4) auf der Bodengleitschiene (5) an den Längsenden jeder Gleitschiene in Form von vorstehenden Teilen auf der Bewegungsbahn der Schiene auf der Bodengleitschiene (5) angeordnet sind, und gegen einen jeweiligen Teil (15) der Schiene (4) anschlagen, und dass die mechanischen Anschläge der Senkbewegung und der Hubbewegung des Sitzes zum Senken des Sitzes die Form eines Rings (12) haben, der an dem Ende der Rastenhülse (9), die die Schnecke aufweist, angeordnet ist, um den Einzug dieser Schnecke in die Rastenhülse (9) zu begrenzen, und zum Heben des Sitzes in der Form eines Anschlags (13), der die Drehung der Pleuelstange (10) in Drehung um die Achse (11) begrenzt.

16. Kraftfahrzeug, das einen Sitz nach einem der vorhergehenden Ansprüche aufweist.
